# EUROPEAN PATENT APPLICATION

(11) **EP 2 431 305 A1**
(43) Date of publication of application: **21.03.2012**
(21) Application number: 11186903.8
(22) Date of filing: 24.09.2008
(51) Int. Cl.: B65G 17/48, B65G 15/02, B65G 17/06, B65G 17/08, B65G 17/46

(54) **Apparatus for conveying products**

(30) Priority: 24.09.2007 NL 2000874
(62) Divisional of application: 08164969.1
(71) Applicant: Specialty Conveyor B.V., 1689 AN Zwaag (NL)
(72) Inventor: Broers, Johannes Wilhelmus, 1696 AE OOSTERBLOKKER (NL); Balk, Wouter, 1396 JK Baambrugge (NL)
(74) Representative: De Vries & Metman

(57) **Abstract**

An apparatus (1) for conveying products (7), comprising at least two parallel, side-by-side endless conveyor belts drivable in a conveying direction, which at least partially follow an arcuate path, one conveyor belt forming an inner conveyor belt (3) and the other conveyor belt forming an outer conveyor belt (4), each conveyor belt (3, 4) comprising a conveying surface (5, 6) for supporting the products (7) thereon, and a transfer element (10) for transferring the products (7) from one conveyor belt to the other conveyor belt, wherein the apparatus (1) is provided with retaining means (11, 12, 13) for preventing displacement and/or tilting of the products (7) in transverse direction in the arcuate path.

## Description

The present invention relates to an apparatus for conveying products, comprising an endless conveyor belt drivable in a conveying direction, which conveyor belt at least partially follows an arcuate path and which comprises a conveying surface for supporting the products thereon, which conveying surface is tilted relative to the horizontal plane in the arcuate part, seen in vertical cross-sectional view of the conveyor belt, about an axis which extends parallel to the horizontal component of the conveying direction.

Such an apparatus is known from US 4,613,087. In the known apparatus, the width of the conveyor belt is such that parallel transport of the products is possible. Because products traversing an inner curve experience a smaller centrifugal force than products traversing an outer curve, displacement of the products is prevented in the known device by disposing the conveyor belt with a tilt relative to the horizontal plane.

The object of the invention is to provide an improved apparatus.

This object is accomplished with the apparatus according to the invention, which is characterised in that the conveyor belt is a first conveyor belt having a first conveying surface and in that the apparatus comprises at least a second drivable, endless conveyor belt having a second conveying surface, which extends at least substantially parallel to said first conveyor belt. The apparatus according to the invention makes it possible to convey a wide product flow along an arcuate path and to influence the transverse force being exerted on the products as a result of the centrifugal force by influencing the speed and/or the degree of tilt of the conveying surfaces of the first and the second conveyor belt individually. This provides a greater freedom of design, making it possible to minimise the risk of displacement of products as well as the risk of products falling over. The latter is important in particular in the case of less stable products, such as bottles and the like. In the aforesaid known device it is for example not possible to influence the transverse force exerted on the products across the width of the product flow. Furthermore, because of the (roof-like) shape of the conveyor belt, unstable products cannot be conveyed. The apparatus according to the invention is therefore more suitable for conveying unstable products than a device which only compensates for displacement, because it is possible to maintain a flat configuration of the individual conveying surfaces. In the case of a spiral conveyor, the invention makes it possible, for example, to use a reduced height in comparison with a single conveyor belt that slopes upwards progressively in the direction of the outer curve, because the individual conveyor belts make it possible to dispose the conveyor belts in a horizontal plane. This makes it possible to realise a greater conveying length and, in the case of a buffer, a larger buffering capacity.

In a practical embodiment, the second conveying surface of the second conveyor belt is likewise tilted relative to the horizontal plane in the arcuate part, seen in vertical cross-sectional view of the second conveyor belt, about an axis which extends parallel to the horizontal component of the conveying direction of the second conveyor belt. Because of this, the transverse force acting on the products as a result of the centrifugal force can be reduced in the direction parallel to the first and the second conveyor belt.

The aforesaid tilting can be effected by disposing at least the first conveyor belt at an angle relative to the horizontal plane such that the first conveying surface is tilted relative to the horizontal plane. Furthermore, at least the first conveyor belt may have a wedge-shaped cross-section so as to effect a tilted orientation of the first conveying surface relative to a bottom side of the first conveyor belt. In the latter case, the bottom side of the conveyor belt may have a horizontal orientation, seen in cross-sectional view thereof, whilst the other side thereof has a tilted orientation. The advantage of this is that it is possible to use said tilted orientation with existing apparatuses not exhibiting a tilting angle without drastic alterations to the apparatus being required.

The first conveying surface may be concave in a direction perpendicular to the conveying direction. This has been found to be very advantageous in practice, because the products on the conveying surface seek equilibrium at a particular conveying speed. The movement in transverse direction appears to take place automatically in this type of apparatus, because some form of vibration caused by the conveyor belt drive will take place at all times.

In a preferred embodiment, the first and the second conveying surface of the first and the second conveyor belt, respectively, are adjacent to each other, seen in vertical cross-sectional view of the first and the second conveyor belt. This has a space-saving effect, and if the first and the second conveying surface are also at least substantially in line with each other, seen in vertical cross-sectional view of the first and the second conveyor belt, this makes it possible to convey products simultaneously on the first and the second conveying surface in one conveying direction. In fact, the two conveying surfaces behave as one wide conveying surface in that case. The speed of the first and the second conveyor belt is of course controlled in such a manner that the difference in speed between the first and the second conveying surface will be minimal. Although the first and the second conveying surface are adjacent to each other, there may be some space between the first and the second conveyor belt, for example for a transfer mechanism.

The apparatus may be provided with a transfer element for moving the products from the first to the second conveyor belt, wherein the first and the second conveying surface are preferably at least substantially free from obstacles near a transition between the first and the second conveying surface. Because the inclined orientation of the conveying element obviates the need to provide retaining members or guides along the conveyor belt, said transfer element may be a simple element, for example a guide.

In an alternative embodiment, the conveying direction of the first conveyor belt may be opposed to that of the second conveyor belt. It is obvious that the inclined orientation has major advantages in this case, because a product falling over on one conveyor belt might interfere with the progress on the adjacent conveyor belt. In the case of a single belt this problem is less severe, because the product that falls over will only move off the conveyor belt in that case.

The angle of tilt of the first conveying surface may be different from that of the second conveying surface. This makes it possible to influence the transverse force exerted on the product for each conveyor belt individually. The first and the second conveying surface may moreover be disposed at least substantially at the same vertical level, so that the space in vertical direction is used in an efficient manner.

The invention further relates to an apparatus for conveying products, comprising at least two parallel, side-by-side endless conveyor belts drivable in a conveying direction, which at least partially follow an arcuate path, one conveyor belt forming an inner conveyor belt and the other conveyor belt forming an outer conveyor belt, each conveyor belt comprising a conveying surface for supporting the products thereon, and a transfer element for moving products from one conveyor belt to the other conveyor belt, wherein the apparatus is provided with retaining means for preventing displacement and/or tilting of the products in transverse direction in the arcuate path. This apparatus makes it possible to realise a high conveying speed, while products can be transferred from the inner conveyor belt to the outer conveyor belt, or vice versa, in a controlled manner by means of the transfer element, whilst the retaining means at the same time prevent the products from being prematurely transferred from one conveyor belt to the other. The conveying capacity is thus increased without using a larger number of conveyor belts.

It is advantageous if the retaining means are arranged to move along with the inner and/or the outer conveyor belt, because the risk of friction between the products and the retaining means is minimised in that case.

In practice, said retaining means may be obstacles present on the conveying surface. The apparatus is preferably provided with an unlocking mechanism for temporarily removing the obstacles, because it will be easier in that case to move products from one conveyor belt to the other conveyor belt.

The retaining means may be provided at least at the location of an inner circumferential area of the inner conveyor belt and/or at the location of an outer circumferential area of the inner conveyor belt and/or at the location of an inner circumferential area of the outer conveyor belt and/or at the location of an outer circumferential area of the outer conveyor belt. This depends on the type of retaining means and the orientation of the conveying surface.

If the retaining means are configured as obstacles, the transfer element may be designed to lift the products over the obstacles.

The retaining means may also be comprised in the orientation of the conveying surface of at least the inner or the outer conveyor belt, which may to that end be tilted relative to the horizontal plane, seen in vertical cross-sectional view of the inner and the outer conveyor belt, about an axis which extends parallel to the horizontal component of the conveying direction. As a result, the conveyor belts can be free from obstacles, because the force exerted in transverse direction on the products as a result of the centrifugal force is compensated by the inclined orientation of the conveying surface.

In a practical embodiment, at least the conveying surface of the inner conveyor belt may be tilted, in which case additional retaining means are provided at the location of an inner circumferential area of the inner conveyor belt. Said additional retaining means may for example be obstacles present on the conveying surface, which are capable of retaining the products in transverse direction when the conveyor belt is moving at a low speed. Conversely, the outer conveyor belt may be tilted and additional retaining means may be provided at the location of an inner circumferential area of the outer conveyor belt. This embodiment is in particular advantageous if the products are transferred from the first conveyor belt to the second conveyor belt, because the inclined orientation obviates the need to use obstacles.

The invention also relates to an apparatus for conveying products, comprising at least one drivable, endless conveyor belt which at least has a parallel part in which the apparatus comprises a transport portion and a return portion, which transport and return portions extend parallel to each other and which at least partially follow an arcuate path, wherein the transport portion forms an inner arcuate part and the return portion forms an outer arcuate part, wherein the conveyor belt comprises a conveying surface for supporting the products thereon, and wherein the apparatus is provided with retaining means for preventing displacement and/or tilting of the products in transverse direction in said arcuate path.

The invention also relates to an apparatus for conveying products, comprising an endless conveyor belt drivable in a conveying direction, which at least partially follows an arcuate path, wherein the conveyor belt comprises a conveying surface for supporting the products thereon, and wherein the supporting surface is tilted relative to the horizontal plane in the arcuate part, seen in vertical cross-sectional view of the conveyor belt, about an axis that extends parallel to the horizontal component of the conveying direction, characterised in that the apparatus has a parallel transition to another conveyor belt at the location of an inlet and/or an outlet of the conveyor belt for moving the products between the conveyor belt and the other conveyor belt via said parallel transition. Preferably, the normal of the conveying surface of the conveyor belt and that of the other conveyor belt have at least substantially the same orientation near the transition, so that the products can be transferred as gradually as possible. Said transfer can for example be realised by means of a guide. This apparatus is typically suitable for conveying a mass flow of less stable products, because a parallel transition is desirable with this type of transport with a view to the stability of the products, whilst the inclined orientation of the conveying surface of the conveyor belt prevents displacement and/or tilting of the products in the arcuate part. In practice this means that the conveyor belt and the other conveyor belt will have a conveying surface in the horizontal plane at the location of the transition, whilst the conveyor belt will be tilted relative to the horizontal plane at locations remote from the transition.

The invention will be explained in more detail hereinafter with reference to drawings, in which embodiments of the invention are very schematically shown.
Fig. 1 is a vertical cross-sectional view of a part of an embodiment of the apparatus according to the invention.
Fig. 2 is a view corresponding to Fig. 1 of an alternative embodiment.
Fig. 3 is a view corresponding to Fig. 2, in which the apparatus is used in an alternative way.
Fig. 4 is a view corresponding to Fig. 1 of another alternative embodiment.
Fig. 5 is a view corresponding to Fig. 1 of another alternative embodiment.
Fig. 6 is a view corresponding to Fig. 1 of another alternative embodiment,
Fig. 7a is a larger-scale view corresponding to Fig. 1 of another alternative embodiment, and Figs. 7b-d are smaller-scale views corresponding to Fig. 7a, which show a product in various positions thereof on the conveyor belt.
Fig. 8 is a view corresponding to Fig. 1 of another alternative embodiment and a larger-scale detail thereof.
Figs. 9a-c are views corresponding to Fig. 8 of an alternative embodiment in various operating conditions thereof.
Fig. 10 is a view corresponding to Fig. 8 of another alternative embodiment.
Fig. 11 is a top plan view of an alternative embodiment of the apparatus according to the invention.
Fig. 12 is a view corresponding to Fig. 11 of an alternative embodiment.
Fig. 13 is a collection of a top plan view and perspective views of a transfer element forming part of an embodiment of the apparatus according to the invention.
Fig. 14 is a view corresponding to Fig. 12 of an alternative embodiment.
Fig. 15 is a view corresponding to Fig. 14 of yet another alternative embodiment.

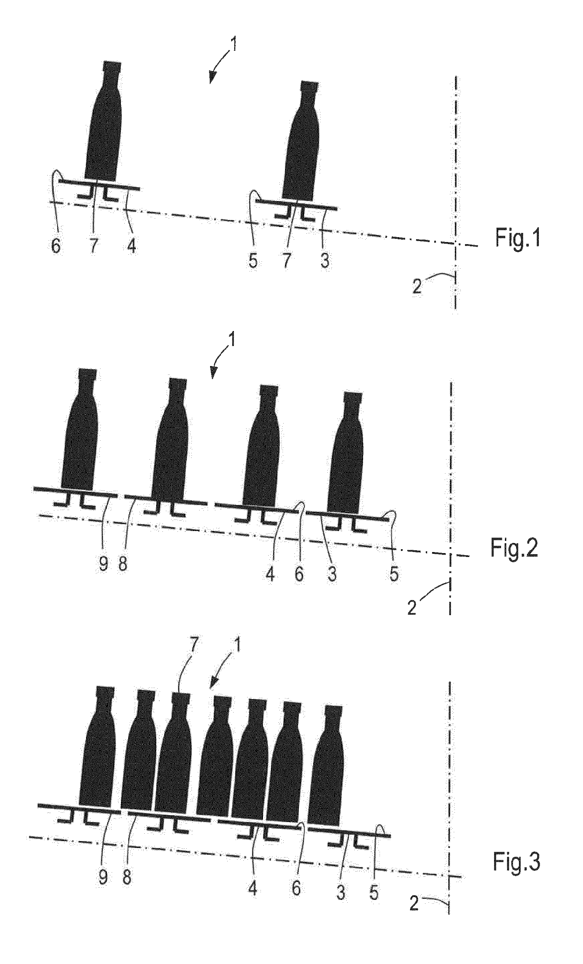

Fig. 1 is a very schematic cross-sectional view of part of an embodiment of the apparatus 1 according to the invention. The embodiment comprises a spiral or helical conveyor having a vertical central axis 2. The apparatus 1 as shown comprises a first drivable, endless conveyor belt 3 and a second drivable, endless conveyor belt 4. The first conveyor belt 3 has an upwardly facing first conveying surface 5 and the second conveyor belt 4 has an upwardly facing second conveying surface 6. Products 7 are supported on the first and the second conveying surface 5, 6. The first and the second conveyor belt 3, 4 extend parallel to each other, and in this embodiment the two conveyor belts 3, 4 both move at least substantially in the same conveying direction. The conveying direction has a horizontal component which is tangentially oriented relative to the central axis 2 in the spiral path. Because of the spiral shape, the conveying direction also has a vertical component.

Seen in the vertical cross-sectional view of the first and the second conveyor belt 3, 4, as shown in Fig. 1, the first and the second conveying surface 5, 6 are tilted relative to the horizontal plane about an axis that extends parallel to the horizontal component of the conveying direction. In practice, the orientation of the tilt is such that the level of each conveying surface 5, 6 becomes higher as the distance to the central axis 2 increases.

In the embodiment that is shown in Fig. 1, the first and the second conveyor belt 3, 4 have a flat shape and said first and said second conveyor belt are disposed at an angle relative to the horizontal plane. As a result, both the first and the second conveying surface 5, 6 are tilted relative to the horizontal plane, seen in vertical cross-sectional view of the first and the second conveyor belt 3, 4.

The first and the second conveyor belt 3, 4 may have various shapes. In practice a conveyor belt consisting of a number of slats attached to a conveying element, such as a chain, has found to be an advantageous solution.

Fig. 2 shows an alternative embodiment in which the apparatus 1 comprises four parallel conveyor belts 3, 4, 8, 9. The first and the second conveying surface 5, 6 and the conveying surfaces of the other conveyor belts 8, 9 are adjacent to each other, seen in vertical cross-sectional view of the conveyor belts 3, 4, 8 and 9. The conveying surfaces of the conveyor belts 3, 4, 8, 9 are at least substantially in line with each other, seen in the aforesaid vertical cross-sectional view. The aforesaid adjacent conveying surfaces need not touch one another. It is even possible that a transfer mechanism is disposed between two adjacent conveyor belts.

The embodiment shown in Fig. 2 may also be used in a different manner. This is shown in Fig. 3. By driving the individual conveyor belts 3, 4, 8 and 9 in such a manner that the differences in speed between two adjacent conveyor are very small or even amount to zero, the conveying surfaces of the respective conveyor belts 3, 4, 8 and 9 will behave as one conveying surface, so that effectively one wide conveyor belt is formed.

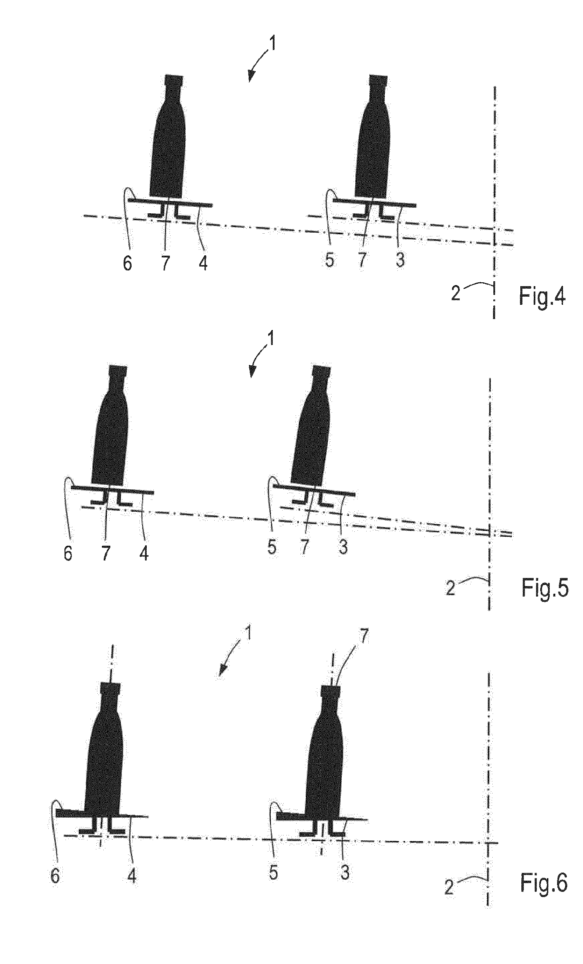

Fig. 4 shows an alternative embodiment, in which the first and the second conveyor belt 3, 4 have the same angle of tilt relative to the horizontal plane, seen in the vertical cross-sectional view of the conveyor belts 3, 4. The conveying surfaces 5, 6 are disposed at different vertical levels.

Fig. 5 shows another alternative embodiment, in which the angle of tilt of the first conveying surface 5 is different from that of the second conveying surface 6. The first and the second conveying surface 5, 6 are located at least substantially at the same vertical level. In practice the second conveying surface 6 located furthest away from the central axis 2 may have a larger angle of tilt than the first conveying surface 5 located closer to the central axis 2, so as to reduce the transverse force exerted on the products 7 parallel to the first or the second conveying surface 5, 6 as a result of the centrifugal force. The fact is that as a result of a greater distance from the central axis 2 and a greater speed in comparison with the first conveyor belt 3, the centrifugal force exerted on the products 7 on the second conveyor belt 4 will be larger than the centrifugal force exerted on the products 7 on the first conveyor belt 3.

The conveyor belts 3, 4 shown in Fig. 6 extend parallel to the horizontal plane on the bottom side, seen in vertical cross-sectional view of said conveyor belts, whilst the conveying surfaces 5, 6 are tilted relative to said horizontal plane. The advantage of this embodiment is that use can be made of the shape of an apparatus which already exists. The first and the second conveyor belt 3, 4 have a wedge-shaped cross-section in this case.

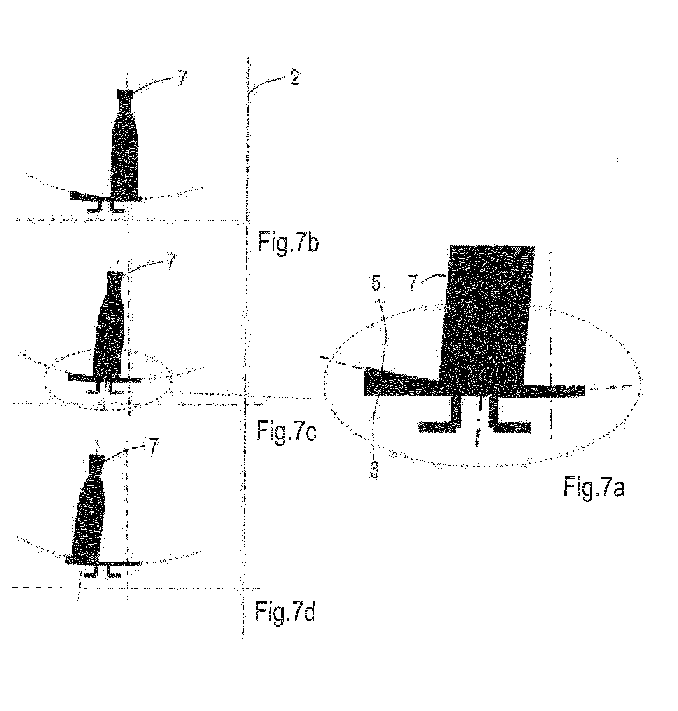

Fig. 7a shows an alternative embodiment of a first conveyor belt 3, whose conveying surface 5 is concave in a direction perpendicular to the horizontal component of the conveying direction. The concavity is formed by an arcuate shape. During operation, the products appear to automatically seek equilibrium on the first conveying surface 5 in dependence on the speed of the first conveyor belt 3. This is illustrated in Figs. 7b-7d.

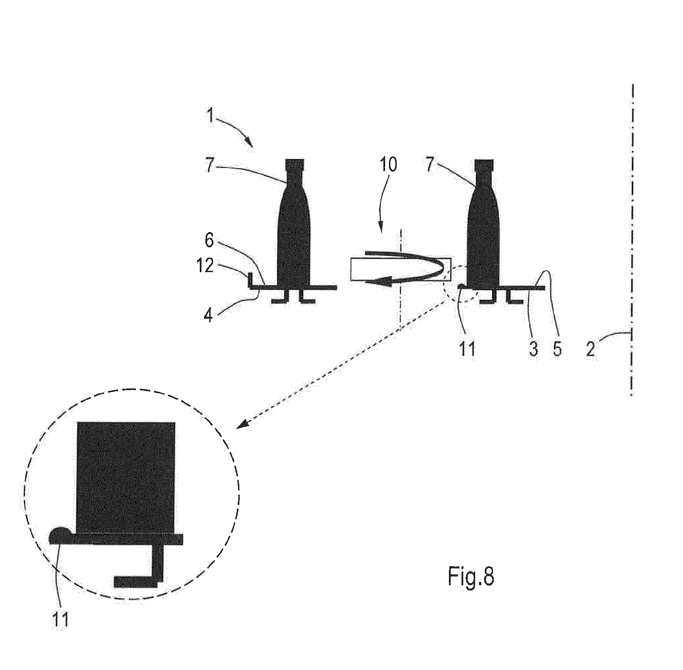

Fig. 8 is an illustration of an embodiment of the apparatus 1 comprising two drivable, parallel conveyor belts, one conveyor belt forming an inner conveyor belt 3 and the other conveyor belt forming an outer conveyor belt 4. The inner conveyor belt 3 is located closer to the central axis 2 than the outer conveyor belt 4. The inner and outer conveyor belt 3, 4 have a conveying surface 5, 6, respectively, for supporting the products 7 thereon. In this embodiment the first and the second conveyor belt 3, 4 are disposed so that the conveying surfaces 5, 6 lie in the same horizontal plane, seen in vertical cross-sectional view of the first and the second conveyor belt 3, 4. The apparatus 1 further comprises a transfer element 10 for moving the products 7 from the inner conveyor belt 3 to the outer conveyor belt 4, or vice versa. Retaining means are provided for preventing displacement and/or tilting of the products 7 in transverse direction in the spiral path. In this case said retaining means are formed by first obstacles 11, which retain the products 7 on the inner conveyor belt 3, and by second obstacles 12, which retain the products 7 on the outer conveyor belt 4. The first obstacles 11 are provided at the location of an outer circumferential area of the inner conveyor belt 3, but they may also be provided at the location of an inner circumferential area of the outer conveyor belt 4, for example when the inner and the outer conveyor belt 3, 4 are disposed close together. In this case the second obstacles 12 are provided at the location of an outer circumferential area of the outer conveyor belt 4. The outer circumferential area of a conveyor belt is located further away from the central axis 2 than the inner circumferential area. The use of the first and the second obstacles 11, 12 makes it possible to drive the conveyor belts 3, 4 at a high speed, without the products 7 being moved from the inner conveyor belt 3 to the outer conveyor belt 4 prematurely (i.e. before the transfer element 10 carries out this operation). The first and second obstacles 11, 12 can move along with the respective inner and outer conveyor belts 3, 4, for example because they are fixed to the conveying surface 5, 6. In the case of a slat conveyor, the slats may be provided with a stop cam, for example.

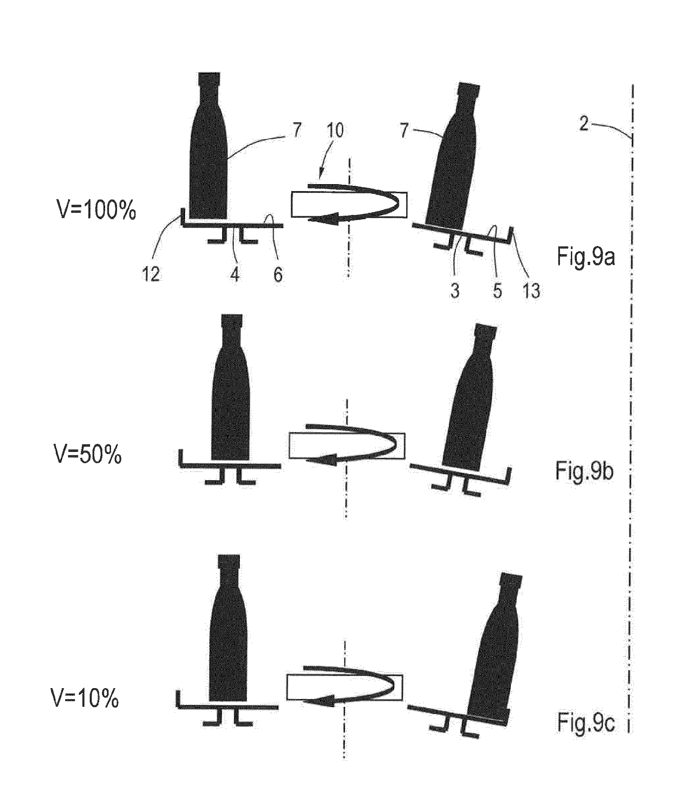

Figs. 9a-c are views of an alternative embodiment, which show the positions of the products 7 on the first and the second conveying surface 5, 6 at different speeds. The first conveyor belt 5 is now tilted relative to the horizontal plane, seen in vertical cross-sectional view of the conveyor belt 3, about an axis that extends parallel to the horizontal component of the conveying direction. This obviates the need to provide obstacles at the location of the outer circumferential area of the inner conveyor belt 3. In fact, it is the orientation of the first conveying surface 5 that now makes up the retaining means. This facilitates the transfer of products 7 between the belts, because there is no need to effect a lifting movement over an obstacle. The second conveying surface 6 of the outer conveyor belt 6 extends horizontally, seen in vertical cross-sectional view of the conveyor belt 4, but it may also be tilted about an axis that extends parallel to the horizontal component of the conveying direction.

Fig. 9a shows the position of the products on the conveyor belts 3, 4 at a high conveying speed (V=100%), Fig. 9b shows said position at a medium speed (V=50%), and Fig. 9c shows said position at a low speed (V=10%). At a high speed, the products 7 on the outer conveyor belt 4 are retained by the second obstacle 12, and at a low speed the products 7 on the inner conveyor belt 3 are retained by additional retaining means, such as third obstacles 13, which are present on the first conveying surface 5 at the location of an inner circumferential area thereof. Such additional retaining means might also be used at the second conveying surface 6 of the outer conveyor belt 4, at the location of an outer circumferential area thereof, if the second conveying surface 6 were to be oriented at an angle of tilt as well.

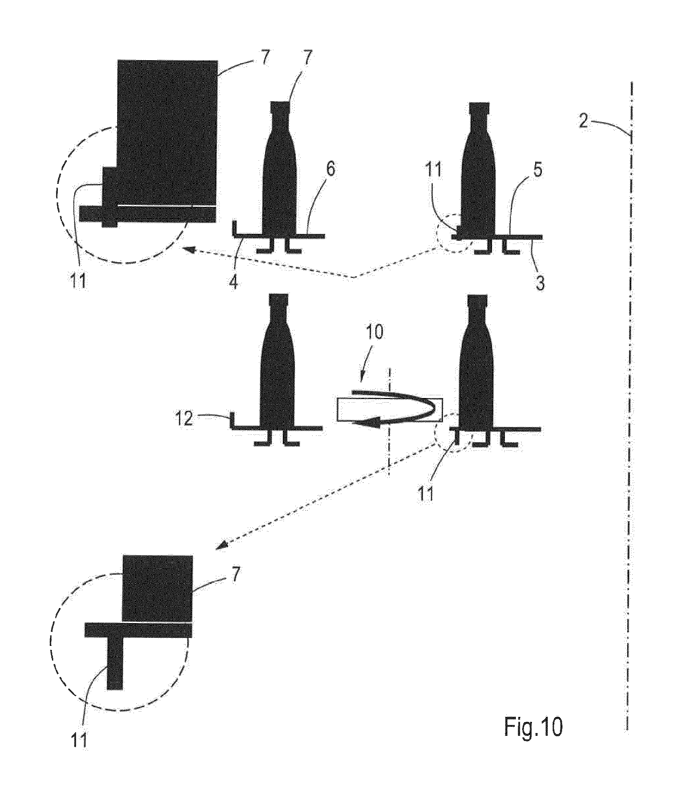

The alternative embodiment shown in Fig. 10 resembles the embodiment shown in Fig. 8, but in this case the apparatus 1 is provided with an unlocking mechanism (not shown) for removing the first obstacles 11 temporarily. This facilitates the transfer of products between the inner and the outer conveyor belt 3, 4.

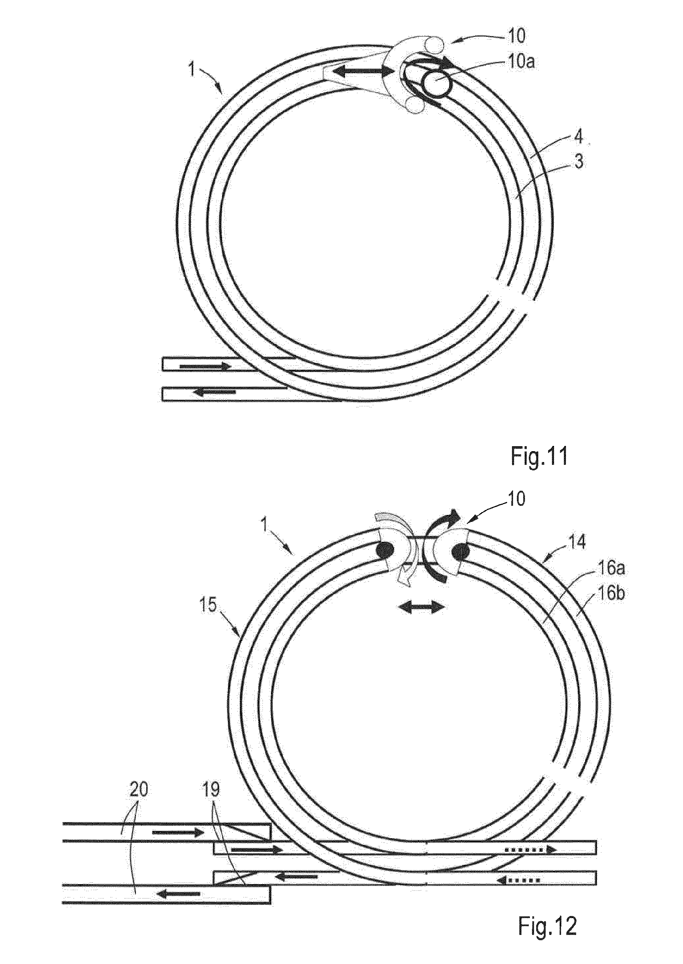

Fig. 11 shows an alternative embodiment of a spiral conveyor, in which the transfer element 10 is movable along the inner conveyor belt 3 and the outer conveyor belt 4. In this case the apparatus 1 is suitable for use as a variable buffer. The retaining means in the arcuate part may comprise one or more of the features of the various embodiments as discussed above, for example the presence of obstacles on the conveying surface or the tilted orientation of the conveying surface.

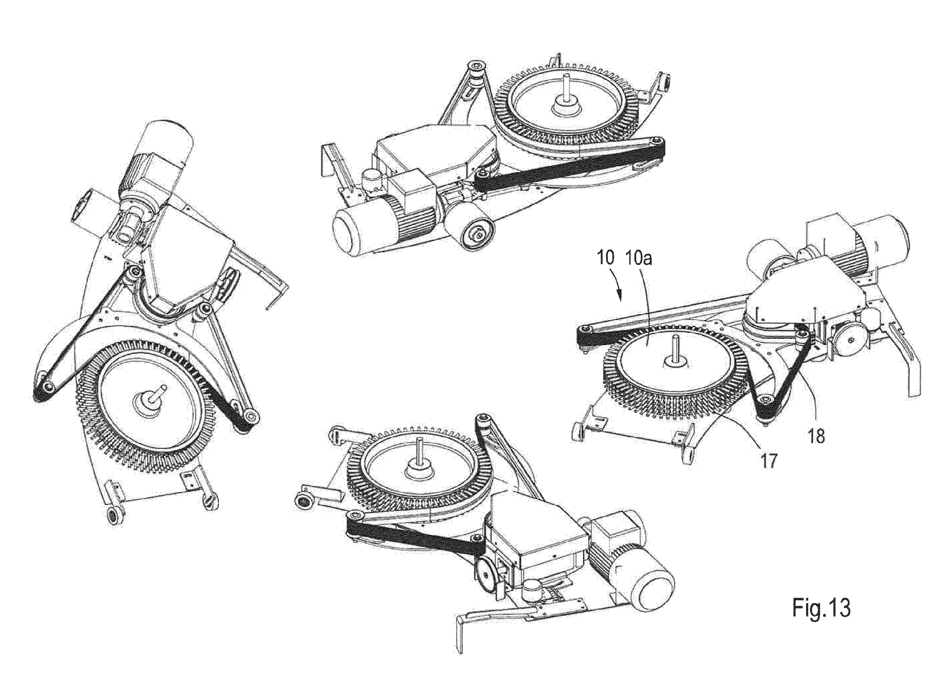

The transfer element 10 shown in Fig. 11 is capable of moving the products from the inner conveyor belt 3 to the outer conveyor belt 4, or vice versa, by guiding said products. It has been found to be advantageous to drive a roller 10a, along which the products move, so as to prevent round products rolling off while being moved. An adequately functioning alternative mechanism is a freely rotating roller 10a having an irregular surface. Said irregular surface may be provided with a large number of projections 17, which have a radial component in relation to an axis of rotation of the freely rotating roller 10a. This is illustrated in various views of such a transfer element 10 in Fig. 13. In practice, rigid to slightly flexible elongated projections 17, for example made of rubber, have been found to be very suitable. The roller 10a is for example provided with rows of four projections arranged one above the other, which rows of projections 17 are evenly spaced in circumferential direction. The four projections are for example 5 mm thick and 40 mm long. This depends on the dimensions of the products 7 and of the apparatus 1, of course. The products can be retained on either side by the projections 17, and be moved to the adjacent outer conveyor belt 4 without rotating relative to the roller 10a. Furthermore, the roller 7a may be driven. Fig. 13 also shows a drivable belt 18, which cooperates with the roller 7a. Basically, it is possible to use the principle of the roller 7a also with spiral conveyors which are not provided with retaining means for preventing uncontrolled displacements of products in the transverse direction of the conveyor belts, although this type of transfer element 10 has been found to be suitable, on account of its flexibility, for lifting the products over a relatively small obstacle. Moreover, it has been found that this type of transfer element is very well capable of picking up and putting down unstable products from and on conveyor belts arranged at an angle relative to each other and relative to the horizontal plane. Furthermore, the principle of the transfer element 10 provided with the projections 17 need not be limited to a roller 7a, but the projections 17 may also be provided on a different type of support, for example an endless conveyor belt.

Fig. 12 shows another embodiment, in which the apparatus 1 comprises two separate conveyor parts 14 and 15. The apparatus forms a spiral conveying path comprising one drivable, endless conveyor belt. The transfer element 10 divides the apparatus 1 into two separate conveyor parts 14 and 15. Since the two parts have the same features, only the operation of the conveyor parts 14 will be explained herein. The conveyor part 14 comprises a parallel part in which the conveyor belt has a transport portion 16a and a return portion 16b. Said transport portion 16a and said return portion 16b, which extend parallel to each other, partially follow an arcuate path. The transport portion 16a forms an inner arcuate part and the return portion 16b forms an outer arcuate part. In this embodiment, the apparatus 1 is furthermore provided with retaining means for preventing movement and/or tilting of the products in transverse direction in the arcuate path. The retaining means may comprise one of the aforesaid features of the other embodiments. As is the case with the embodiment shown in Fig. 11, the two adjacent conveyor belts 16a and 16b have opposed conveying directions.

Fig. 12 furthermore shows that parallel transitions 19 are present at the inlet and the outlet of the transport portion 16a and the return portion 16b. The conveying surfaces of the transport portion 16a and the return portion 16b may still extend in the horizontal plane at the location of the parallel transitions 19, while they are tilted relative to the horizontal plane in the arcuate part, seen in vertical cross-sectional view of the conveyor belt 16a, 16b.

In the embodiment shown in Fig. 12, the outer curve of the transport portion 16a of the conveyor belt is the inner curve in the return portion 16b of the conveyor belt, because the apparatus comprises one conveyor belt. In this case the retaining means must therefore be arranged so that the products 7 cannot be displaced and/or tilt in both opposite transverse directions. The retaining means may for example be made up of obstacles at both end portions of the conveying surfaces, seen in the transverse direction thereof. Preferably, said obstacles are removable obstacles so as to make it easier to realise a parallel transition. It is also possible to use the aforesaid inclined position. The outer curve of the conveyor belt in the transport portion 16a and in the return portion 16b will be tilted upwards in that case, so that the conveyor belt will be tilted about its longitudinal direction in the spiral part 14 after being reversed. Also in this case combinations of various inclined positions and obstacles as described above with reference to the other embodiments are conceivable.

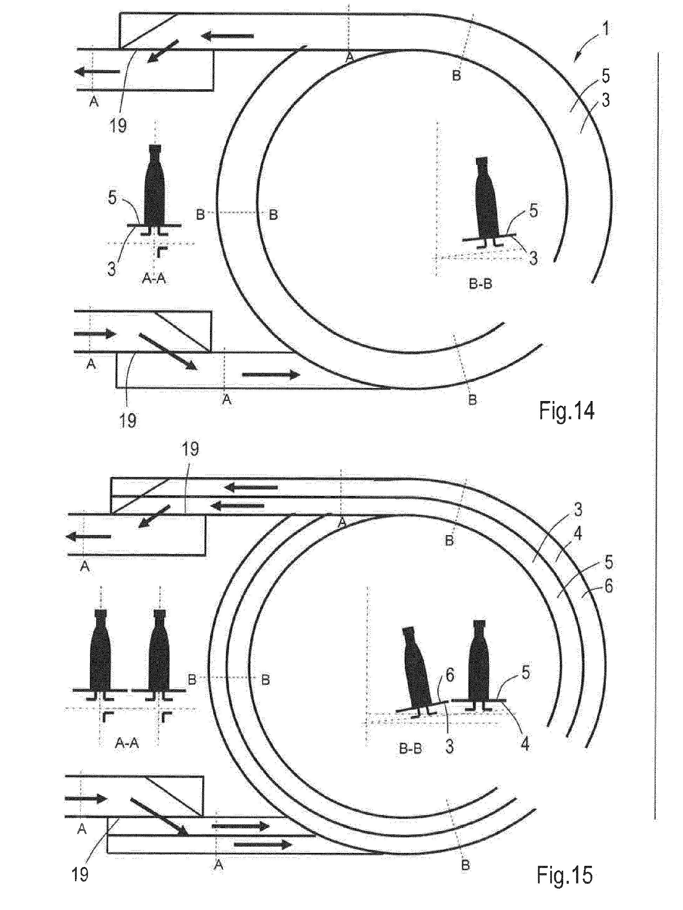

Fig. 14 shows an alternative embodiment of the apparatus 1 in two illustrative vertical cross-sectional views. The apparatus comprises two parallel transitions 19. At the location of the transitions 19 (near A-A), the conveyor belt 3 extends so that the conveying surface 5 lies in the horizontal plane. At the location of the arcuate part of the spiral shape (B-B), the conveying surface 5 is tilted relative to the horizontal plane, so that the conveying surface 5 is disposed higher in the outer curve than in the inner curve of the conveyor belt 3.

Fig. 15 shows an apparatus compatible with the apparatus shown in Fig. 14, but in this case the apparatus comprises two parallel conveyor belts 3, 4. At the location of the transitions 19 (near A-A), the conveying surfaces 5, 6 of the two conveyor belts 3, 4 extend in the horizontal plane, whilst in the arcuate part of the spiral path (B-B), one conveyor belt 3 is tilted relative to the horizontal plane, seen in vertical cross-sectional view of said conveyor belt 3. The conveying surface 6 of the adjacent conveyor belt 6 extends in the horizontal plane, seen in the vertical cross-sectional view of said conveyor belt 4.

From the foregoing it will be apparent that the apparatus 1 according to the invention provides a high degree of freedom in designing a conveyor comprising parallel, arcuate conveyor belts.

The invention is not limited to the embodiments described above and shown in the drawings, which can be varied in several ways within the scope of the invention. Based on the above, it is for example possible to conceive an apparatus consisting of a combination of the various features of the embodiments.

## Claims

1. An apparatus (1) for conveying products (7), comprising at least two parallel, side-by-side endless conveyor belts drivable in a conveying direction, which at least partially follow an arcuate path, one conveyor belt forming an inner conveyor belt (3) and the other conveyor belt forming an outer conveyor belt (4), each conveyor belt (3, 4) comprising a conveying surface (5, 6) for supporting the products (7) thereon, and a transfer element (10) for transferring the products (7) from one conveyor belt to the other conveyor belt, wherein the apparatus (1) is provided with retaining means (11, 12, 13) for preventing displacement and/or tilting of the products (7) in transverse direction in the arcuate path.

2. An apparatus according to claim 1, wherein the conveying surfaces (5, 6) lie in the same horizontal plane at the transfer element (10).

3. An apparatus according to claim 1 or 2, wherein the retaining means are formed by first obstacles (11) for retaining the products (7) on the inner conveyor belt (3), and by second obstacles (12) for retaining the products (7) on the outer conveyor belt (4).

4. An apparatus according to claim 3, wherein the first obstacles (11) are provided at the location of an outer circumferential area of the inner conveyor belt (3) or at the location of an inner circumferential area of the outer conveyor belt (4).

5. An apparatus according to claim 1, wherein the inner conveyor belt (3) is tilted relative to the horizontal plane such that the orientation of the first conveying surface (5) forms the retaining means.
